# FASCICULE DE BREVET EUROPEEN

(11) **EP 0 512 036 B1**
(45) Date de publication et mention de la délivrance du brevet: **09.11.1994**
(21) Numéro de dépôt: 91903672.3
(22) Date de dépôt: 22.01.1991
(51) Int. Cl.: C08J 5/18

(54) **FILM PLASTIQUE DEGRADABLE COMPORTANT UNE CHARGE VEGETALE ACTIVE, LA LIGNINE**
ABBAUBARER PLASTIKFILM MIT LIGNIN ALS AKTIVEM PFLANZLICHEM FÜLLSTOFF
DECOMPOSABLE PLASTIC FILM HAVING LIGNIN AS AN ACTIVE PLANT FILLER

(30) Priorité: 23.01.1990 FR 9000965
(43) Date de publication de la demande: 11.11.1992
(73) Titulaire: BONO, Pierre, F-06530 Peymeinade (FR); LAMBERT, Claude, F-91240 S.-Michel-sur-Orge (FR)
(72) Inventeur: BONO, Pierre, F-06530 Peymeinade (FR); LAMBERT, Claude, F-91240 S.-Michel-sur-Orge (FR)
(74) Mandataire: Madeuf, René Louis
(86) Numéro de dépôt international: FR9100034
(87) Numéro de publication internationale: WO9111481

## Description

on connaît les films plastiques photodégradables et, plus récemment, les films plastiques dits biodégradables. Les premiers sont obtenus par introduction dans la matière de base qui peut être une polyoléfine par exemple, d'additifs photoactifs. Il s'agit en général de molécules contenant de l'oxygène et/ou des métaux lourds dont le rôle est d'initier la formation de radicaux libres sous l'action du rayonnement ultra-violet (UV), ces radicaux provoquent la rupture des chaînes du polymère et donc le fragilisent, en le rendant cassant, donc mécaniquement dégradable.

Cependant l'utilisation de certains additifs fortement "oxydants" font démarrer la dégradation immédiatement après la fabrication des films, ce qui a pour conséquence de réduire les possibilités de stockage soit des mélanges maîtres, soit des films.

Enfin, il faut noter que, dans les utilisations agricoles des films photodégradables, les parties du films enfouies sont protégées des UV et donc inaltérées, ce qui a pour conséquence d'augmenter les "déchets".

Les films plastiques biodégradables sont quant à eux obtenus par introduction d'une charge organique dite biodégradable telle "l'amidon" qui "consommée" par les microorganismes rendra à son tour le film fragile et donc plus facilement dégradable sous l'influence des UV.

L'addition de l'amidon comme charge consommable entraîne des conséquences tant au niveau de la fabrication du film que dans celui des propriétés mécaniques du film ; en effet : l'amidon se décompose partiellement dès 185 °C pendant l'opération d'extrusion ; l'amidon n'est pas compatible avec les polymères et par suit fragilise les films. Enfin, la granulométrie de l'amidon disponible industriellement ne permet pas la réalisation de films de faible épaisseur. Or, l'épaisseur est un élément du prix du film, mais aussi un paramètre qui régit la vitesse de dégradation du film.

On se propose dans la présente invention de réaliser un film plastique par exemple à base de copolymère d'éthylène (généralement des polyoléfines) dans lequel on a introduit de la lignine qui se comporte comme un additif organique biodégradable et qui est consommée par les microorganismes, sans diminuer les autres caractéristiques du produit, notamment les propriétés mécaniques.

La lignine qui se présente sous forme de poudre peut résulter des procédés actuellement connus et utilisés pour la fabrication des pâtes à papier, tels que ceux connus sous les définitions suivantes :
A.P.R. (alcohol, pulping and recovery)
Organosolve
ou tout autre procédé permettant d'obtenir de la lignine de bonne pureté, c'est-à-dire non souillés par des produits chimiques tels que sulfonates, soude, ou bisulfite et se présentant sous forme de poudre pulvérulente (environ 1 à 5 microns de diamètre de grain), ce qui permet de réaliser des films homogènes et de faible épaisseur environ 20 microns plus ou moins 5.

La lignine est une matière végétale polymère constituée de noyaux méthoxylés et hydroxylés qui forment une structure tridimensionnelle. Il s'agit d'un sous-produit obtenu dans la fabrication de la pâte a papier. Son origine végétale le classe dans la catégorie des produits renouvelables, et n'altérant pas les ressources naturelles de la terre, il peut être considéré comme un écoproduit.

Du fait de l'excellente compatibilité de la lignine avec les copolymères éthyléniques, la teneur pondérale de lignine dans le polymère thermoplastique pourra être aussi élevée que 75 % mais sera préférentiellement ajustée dans le film entre 3 et 25 %, ce qui implique l'utilisation de mélanges maîtres.

La combinaison des propriétés photodégradables, biodégradables et oxydantes peut être ici avantageusement utilisée pour obtenir un film dégradable. En effet, la lignine, matière végétale, biodégradable par des champignons (micromycètes) et bactéries contribue sous certaines conditions à la fragilisation du film plastique.
Si l'on a pris soin d'ajouter au mélange maître des additifs photoactifs et/ou oxydants on aura réalisé un film dégradable selon deux processus :
- l'un chimique, par exemple : photodégradation ou oxydation ou la combinaison des deux
- l'autre biologique
l'un contribuant à initier l'autre. La synergie résultante induit une cinétique de dégradation qui permet d'optimiser la durée de vie du film.

Les films plastiques ainsi obtenus peuvent être utilisés pour de nombreuses applications agricoles, et dans la fabrication de sacs poubelles, sacs à déchets divers, et cabas.

Dans les applications agricoles pour lesquelles la solidité du film lors de la première pose est ' essentielle, le film de polyéthylène contenant de la lignine se révèle d'un usage intéressant d'autant que la dégradation du film dans le temps est totale, tant pour les surfaces hors sol que celles enfoules ; toujours dans le domaine des applications agricoles, les capacités d'adsorption et absorption de la lignine, jusqu'à 50 % en poids, d'huiles essentielles, insecticides et autres, permettent alors d'utiliser ce produit en tant qu'additif pour les nouvelles propriétés fongicides et raticides.

De même, les propriétés d'adsorption de la lignine peuvent être mises à profit pour fixer sur la lignine les produits photoactifs préalablement au mélange avec les copolymères, ce qui a pour avantage d'augmenter l'homogénéité et donc sa dégradabilité. D'autre part, ce film plastique contenant de la lignine peut être coextrudé et donc faire partie d'un film composite à plusieurs couches spécifiques.

Il y a lieu de remarquer que les propriétés mécaniques du film dégradable sont comparables à celles du film ne contenant pas de lignine.
- Film vierge : Résistance à la rupture 25 MPa Allongement à la rupture 220 %
- Film avec 5 % de lignine : Résistance à la rupture 25,5 MPa Allongement à la rupture 230 %.

## Revendications

1. Film plastique dégradable, caractérisé en ce qu'il est à base de copolymères d'ethylène, et en particulier de polyoléfines, dans lequel on a incorporé de la lignine sous forme de poudre pulvérulente, le diamètre des grains de cette poudre étant compris entre environ 1 et 5 microns, de manière à réaliser des films homogènes d'épaisseurs comprises de préférence entre 15 et 25 microns.

2. Film plastique dégradable selon la revendication 1, caractérisé en ce que la dégradabilité est augmentée par combinaison avec des additifs photoactifs qui rendent alors en outre le film photodégradable et/ou en combinaison avec au moins un additif chimique, tel qu'un prooxydant.

3. Film plastique dégradable selon l'une des revendications 1 ou 2, caractérisé par une teneur en lignine pouvant atteindre 75 %, mais plus généralement comprise entre 3 et 25 %.

4. Film plastique dégradable selon l'une des revendications 1 à 3, caractérisé en ce que les propriétés mécaniques du film dégradable sont, pour un film avec 5 % de lignine :
| | |
|---|---|
| Résistance à la rupture | 25,5 MPa |
| Allongement à la rupture | 230 % |

5. Film plastique dégradable selon l'une des revendications 1 à 4, caractérisé en ce que le film présente des propriétés particulières complémentaires du genre fongicide et raticide.

6. Film plastique dégradable selon l'une des revendications 1 à 5, caractérisé en ce qu'il est coextrudé pour constituer un élément d'une structure composite.

7. Application du film plastique dégradable selon l'une des revendications 1 à 6 dans l'agriculture ainsi que dans la fabrication des sacs poubelles.

## Claims

1. Decomposable plastic film, characterized in that it is based on ethylene copolymers, and in particular polyolefins, wherein lignin has been incorporated in the form of pulverulent powder, the grain diameter of this powder being comprised substantially between 1 and 5 microns, thereby making homogeneous films of thicknesses preferably comprised between 15 and 25 microns.

2. Decomposable plastic film according to claim 1, characterized in that the decomposition is increased by combination with photo-active additives that moreover cause then the film to be photo-decomposable, and/or in combination with at least one chemical additive, such as a pro-oxidizer.

3. Decomposable plastic film according to one of claims 1 or 2, characterized by a lignin content that can reach 75%, but is more generally comprised between 3 and 25 %.

4. Decomposable plastic film according to one of claims 1 to 3, characterized in that the mechanical properties of the decomposable film are, for a film with a lignin content of 5 % :
| | |
|---|---|
| tear strength | 25.5 MPa |
| breaking elongation | 230 %. |

5. Decomposable plastic film according to one of claims 1 to 4, characterized in that the film exhibits complementary particular properties, typically fungicidal and rat-killing properties.

6. Decomposable plastic film according to one of claims 1 to 5, characterized in that it is coextruded in order to form an element of a composite structure.

7. Application of the decomposable plastic film according to one of claims 1 to 6 in agriculture as well as in the manufacture of refuse bags.

## Patentansprüche

1. Abbaubarer Plastikfilm, **dadurch gekennzeichnet**, daß er auf der Basis von Kopolymeren des Ethylens und im besonderen von Polyolefinen beruht, in welchem man Lignin in Form eines puderförmigen Staubes eingearbeitet hat, wobei die Korngrößen des verwendeten Staubes zwischen ungefähr 1 und 5 Mikrometer beträgt, derart, daß Filme homogener Dicke zwischen vorzugsweise 15 und 25 Mikrometern erhalten werden.

2. Abbaubarer Plastikfilm nach Anspruch 1, gekennzeichnet durch die Abbaubarkeit durch Kombination mit fotoaktiven Additiven, die den Film außerdem lichtabbaubar machen, und/oder zumindest durch Kombinieren mit chemischen Additiven, wie einem Oxidationsmittel.

3. Abbaubarer Plastikfilm nach Anspruch 1 oder 2, gekennzeichnet durch einen Lignin-Gehalt, der 75 % erreichen kann, aber allgemein zwischen 3 und 25 % beträgt.

4. Anbaubarer Plastikfilm nach einem der Ansprüche 1 bis 3, dadurch gekennzeichnet, daß die mechanischen Eigenschaften des abbaubaren Films bei einem Film mit 5 % Lignin folgende Werte haben:
Bruchlast 25,5 MPa
Bruchdienung 230 %.

5. Abbaubarer Plastikfilm nach einem der Ansprüche 1 bis 4, dadurch gekennzeichnet, daß der Film insbesondere ergänzende Eigenschaften fungizider und rattenvernichtender Art aufweist.

6. Abbaubarer Plastikfilm nach einem der Ansprüche 1 bis 5, dadurch gekennzeichnet, daß er koextrudiert ist, um als Bestandteil einer Komposit-Struktur zu dienen.

7. Verwendung eines abbaubaren Plastikfilms nach einem der Ansprüche 1 bis 6 in der Landwirtschaft und der Fabrikation von Abfallsäcken.
